# EUROPEAN PATENT SPECIFICATION

(11) **EP 3 792 667 B1**
(45) Date of publication and mention of the grant of the patent: **18.09.2024**
(21) Application number: 19799514.5
(22) Date of filing: 27.03.2019
(51) Int. Cl.: G01V 5/22

(54) **CONTAINER INSPECTION SYSTEM, PORT FACILITY AND CONTAINER INSPECTION METHOD**
BEHÄLTERINSPEKTIONSSYSTEM, HAFENANLAGE UND BEHÄLTERINSPEKTIONSVERFAHREN
SYSTÈME D'INSPECTION DE CONTENEURS, INSTALLATION PORTUAIRE ET PROCÉDÉ D'INSPECTION DE CONTENEUR

(30) Priority: 07.05.2018 CN 201810426091
(43) Date of publication of application: 17.03.2021
(73) Proprietor: Nuctech Company Limited, TongFang Building Shuangqinglu Haidian District Beijing 100084 (CN)
(72) Inventor: ZONG, Chunguang, Beijing 100084 (CN); SHI, Junping, Beijing 100084 (CN); SONG, Quanwei, Beijing 100084 (CN); MENG, Hui, Beijing 100084 (CN); GUO, Yiwei, Beijing 100084 (CN); GU, Jingyu, Beijing 100084 (CN); LI, Ying, Beijing 100084 (CN); SUN, Shangmin, Beijing 100084 (CN); LI, Jianmin, Beijing 100084 (CN); LI, Yuanjing, Beijing 100084 (CN); CHEN, Zhiqiang, Beijing 100084 (CN)
(74) Representative: Meissner Bolte Partnerschaft mbB
(86) International application number: PCT/CN2019/079916
(87) International publication number: WO 2019/214357

(56) References cited:
- CN-A- 1 602 280
- CN-A- 1 745 435
- CN-A- 1 764 584
- CN-A- 1 867 484
- CN-A- 101 062 747
- CN-A- 106 226 336
- CN-A- 107 860 782
- CN-A- 108 873 088
- CN-U- 203 705 662
- CN-U- 206 020 303
- CN-U- 208 239 633
- CN-Y- 2 840 027
- EA-B1- 022 587
- JP-A- 2005 257 398
- US-A1- 2005 011 849
- US-A1- 2005 011 849
- US-A1- 2005 011 849
- US-A1- 2005 036 853

## Description

### Field

The present disclosure relates to the field of scanning inspection technology, in particular to a container inspection system, a port facility, and a container inspection method.

### Background

With the development of the vessel industry, the workload of container loading and unloading operations is increasing. As large equipment for loading and unloading containers, quay cranes are increasingly used in various ports to achieve automated loading and unloading.

To prevent prohibited cargo from entering the territory through ports and ensure the safety of cargo in circulation, scanning inspection is usually performed on containers after cargo is unloaded. At present, generally after a container is unloaded by a quay crane, the container is transported by an AGV transfer trolley (or container transport truck) in a yard to a designated location to perform scanning inspection on the container. This requires a special area for scanning inspection at the port. Not only is a large space occupied, but also long time is consumed, and the circulation efficiency of the container at the port is low. Besides, dangerous prohibited articles may enter the yard, causing potential safety hazards.

In addition, due to limited space, there is usually only one station for scanning inspection on containers, which greatly limits the efficiency of scanning inspection, resulting in a large accumulation of containers.

It should be noted that the information disclosed in the background section of the present disclosure is only intended to enhance understanding of the general background of the present disclosure, and should not be considered as an admission or any form of implication that the information constitutes related technology well known to those skilled in the art.
US 2005/011849 A1 discloses a crane apparatus installed on a foundation situated in water, comprising: a crane movable along the foundation for unloading containers from a vessel docked along the foundation and placing the containers on a deck of the crane and for transferring the containers from the deck to another location; and a container security scanning system for scanning the containers while the containers are on the deck to determine the presence of radioactive material in the containers.
EA 022 587 B1 discloses an unloading and loading crane with an arrow for loading the ship from the surface of the berth or unloading from the ship to the surface of the quay using a gripper attached to an arrow pivotally connected to the lever by means of a pivot hinge.

### Summary

Embodiments of the present disclosure propose a container inspection system, a port facility, and a container inspection method, to improve the efficiency of scanning inspection as much as possible.

According to an aspect of the present disclosure, the present disclosure provides a container inspection system according to claim 1.

In some embodiments, the switching mechanism includes:
a rotary switching mechanism, which is connected with the inspection device, for rotating at least part of the inspection device, so that after finishing scanning inspection on the container on one of the plurality of stations, the inspection device is configured to perform scanning inspection on the container on another of the plurality of stations.

In some embodiments, the plurality of stations include a first station and a second station, wherein the first station is arranged on a side of a long edge of the second station, and a long edge of the first station and the long edge of the second station are parallel to each other; and the switching mechanism is configured to rotate at least part of the inspection device 180 degrees.

In some embodiments, the inspection device includes a cabin, a ray source and an L-shaped arm installed with a detector, the ray source being disposed in the cabin and rotatable relative to the cabin, and the L-shaped arm being mounted on the cabin and rotatable relative to the cabin.

In an example not forming part of the claimed invention, the plurality of stations include a first station and a second station, wherein the first station is arranged on a side of a short edge of the second station, and a short edge of the first station and the short edge of the second station are parallel to each other; and the switching mechanism includes:
a linear switching mechanism, which is connected with the inspection device, for enabling the inspection device to continue to move along a long edge of the second station after finishing scanning inspection on the container located on the first station, to perform scanning inspection on the container located on the second station.

In some embodiments, the first hoisting component is further configured to hoist the container on which scanning inspection is completed from the station where the container is located and transport the container to a container transport equipment.

In some embodiments, the quay crane further includes a second hoisting component for hoisting the container on which scanning inspection is completed from the station where the container is located and transporting the container to a container transport equipment.

In some embodiments, the container inspection system further includes a guide mechanism disposed on the inspection platform, for guiding the container to fall in place on at least one of the plurality of stations.

In some embodiments, the guide mechanism includes:
a plurality of guide pillars with conic tops and being arranged along edges of at least one of the plurality of stations.

In some embodiments, the guide mechanism is liftable.

In some embodiments, the inspection device includes a cabin, a ray source and an L-shaped arm installed with a detector, the ray source being disposed in the cabin, and the L-shaped arm being mounted on the cabin; and the guide mechanism includes:
a plurality of first guide pillars disposed on a side of the plurality of stations close to the cabin, the plurality of first guide pillars being non-liftable; and
a plurality of second guide pillars disposed on a side of the plurality of stations away from the cabin, the plurality of second guide pillars being liftable.

In some embodiments, the plurality of stations include a first station and a second station, the first station being arranged on a side of the second station along a first direction, the first direction being a length direction of the container; and the switching device is configured to drive the inspection device to rotate 180 degrees relative to the inspection platform, to achieve switching of the inspection device between the first station and the second station.

In some embodiments, the inspection device includes:
a cabin;
a ray source, disposed in the cabin and rotatable relative to the inspection platform;
an L-shaped arm, mounted on the cabin and rotatable relative to the inspection platform; and
a detector mounted on the L-shaped arm.

In an embodiment, which although disclosed is not according to the invention, the plurality of stations include a first station and a second station, the first station being arranged on a side of the second station along a second direction, the second direction being a width direction of the container; and the switching device is configured to drive the inspection device to perform linear motion along a first direction, to achieve switching of the inspection device between the first station and the second station, the first direction being a length direction of the container.

In some embodiments, the guide mechanism is liftable relative to the inspection platform.

According to another aspect of the present disclosure, the present disclosure further provides a port facility, which includes the above-mentioned container inspection system.

According to yet another aspect of the present disclosure, the present disclosure further provides a container inspection method according to claim 11.

In some embodiments, the container inspection method further includes:
hoisting the container on which scanning inspection is completed from the station where the container is located and transporting the container to a container transport equipment.

In some embodiments, a container inspection method includes:
hoisting and transporting, by a first hoisting component of a quay crane, a container to at least one of a plurality of stations disposed on an inspection platform of the quay crane; and
driving an inspection device disposed on the inspection platform to switch among the plurality of stations, to perform scanning inspection on the container on each of the plurality of stations, respectively.

Based on the above-mentioned technical solutions, the inspection device in the embodiment of the container inspection system of the present disclosure may switch among the plurality of stations and move relative to the container on each station, respectively, so as to perform scanning inspection on the container on each station, respectively, so that the inspection position of the container inspection system may be more flexible. The inspection device is not limited to scanning inspection at a specific station. After finishing scanning inspection on the container on one of the stations, the inspection device may turn to another station and perform scanning inspection on the container on the another station, thereby improving the efficiency of scanning inspection.

The port facility and the container inspection method provided by the present disclosure also correspondingly have the above-mentioned beneficial technical effects.

### Brief Description of the Drawings

The drawings described here are used to provide a further understanding of the present disclosure and form a part of the present application. The illustrative embodiments of the present disclosure and description thereof are used for explaining rather than unduly limiting the present disclosure. In the drawings:
Fig. 1 is a front view of an embodiment of a container inspection system of the present disclosure.
Fig. 2 is a top view of an inspection platform in an embodiment of a container inspection system of the present disclosure.
Fig. 3 is a left view of an embodiment of a container inspection system of the present disclosure.
Fig. 4 is a front view of another embodiment of a container inspection system of the present disclosure.
Fig. 5 is an enlarged view of a part denoted by sign I in Figs. 1 and 4.
Fig. 6 is an enlarged view of a part denoted by sign II in Fig. 2.

### Reference numerals:

100. quay crane; 200. inspection device; 300. container;
101. first hoisting component; 102. second hoisting component; 103. inspection platform; 104. first station; 105. second station; 106. first guide pillar; 107. second guide pillar;
201. cabin; 202. ray source; 203. horizonal arm; 204. vertical arm; 205. slewing bearing.

### Detailed Description of the Embodiments

The technical solutions in the embodiments will be described clearly and completely below in conjunction with the accompanying drawings in the embodiments of the present disclosure. Obviously, the described embodiments are only a part of the embodiments of the present disclosure, and not all the embodiments. Based on the embodiments of the present disclosure, all other embodiments obtained by those of ordinary skill in the art without creative work shall fall within the protection scope of the present disclosure.

In description of the present disclosure, it should be understood that orientation or position relations denoted by the terms "center", "transverse", "longitudinal", "front", "rear", "left", "right", "upper", "lower", "vertical", "horizontal", "top", "bottom", "inner", "outer" and the like are orientation or position relations illustrated based on the drawings, are merely for the convenience of describing the present disclosure and simplifying description, instead of indicating or implying the denoted devices or elements must have specific orientations or be constructed and operated in specific orientations, and thus the terms cannot be understood as limiting the protection scope of the present disclosure.

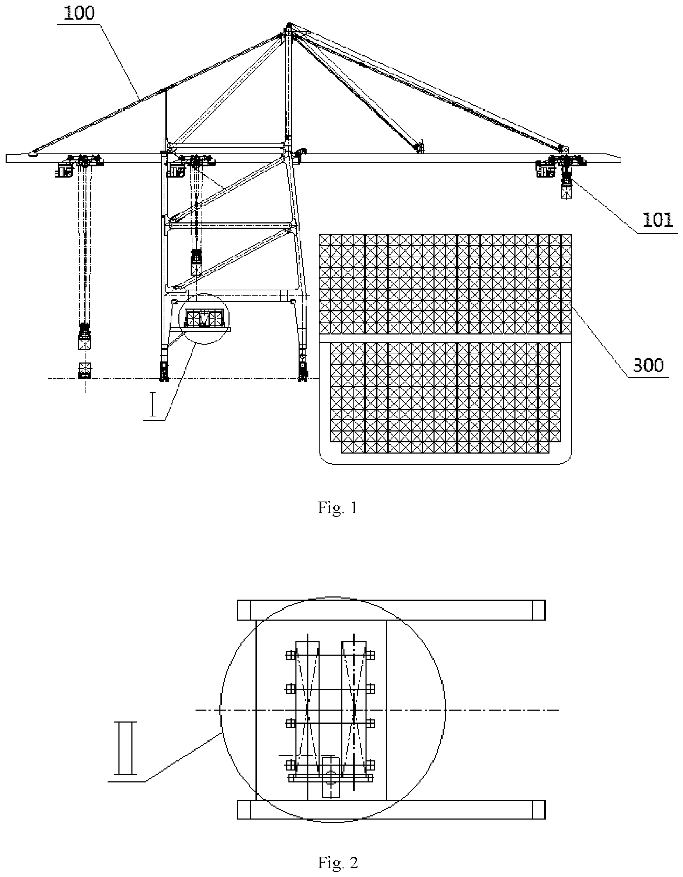

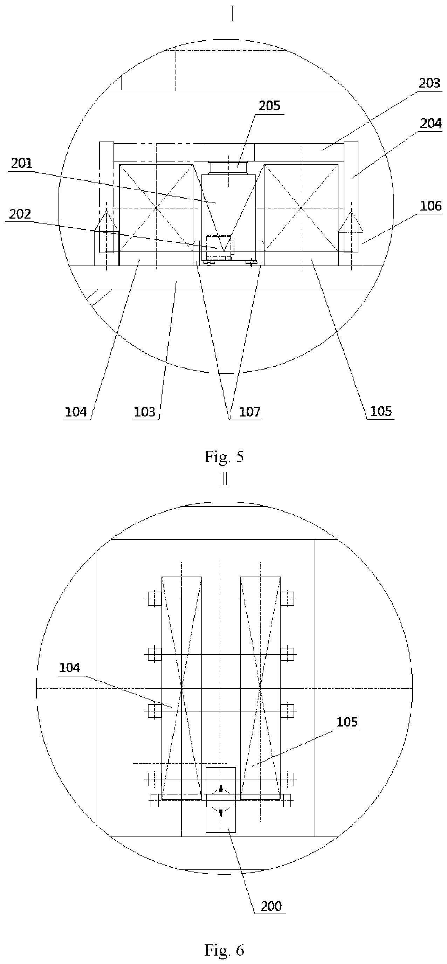

Referring to Figs. 1 and 5, in an illustrative embodiment of a container inspection system provided by the present disclosure, the container inspection system includes a quay crane 100 and an inspection device 200, wherein the quay crane 100 includes a first hoisting component 101 and an inspection platform 103 provided with a plurality of stations, the first hoisting component 101 being configured to hoist a container 300 and transport the container 300 to at least one of the plurality of stations; and the inspection device 200 is disposed on the inspection platform 103 and configured to move relative to the container 300 on each of the plurality of stations, to perform scanning inspection on the container 300 on each of the plurality of stations, respectively.

The inspection device 200 is disposed on the inspection platform 103, and thus may move with the movement of the quay crane 100; at the same time, the inspection device 200 may also move on the inspection platform 103 relative to the container 300 on the station to perform scanning inspection on the container 300.

In the above-mentioned illustrative embodiment, the inspection device 200 may move relative to the container 300 on each station, respectively, to perform scanning inspection on the container 300 on each station, so that the inspection position of the container inspection system may be more flexible. The inspection device 200 is not limited to scanning inspection at a specific station. After finishing scanning inspection on the container 300 on one of the stations, the inspection device 200 may turn to another station and perform scanning inspection on the container 300 on the another station, thus being beneficial to improving the efficiency of scanning inspection.

Furthermore, in the above-mentioned illustrative embodiment, by arranging the inspection device 200 on the inspection platform 103 of the quay crane 100, a floor area occupied by the inspection device 200 may be reduced, and there is no need to reserve a special inspection location for the inspection device 200 in an area outside the quay crane, so that the overall layout of the port is more reasonable; and arranging the inspection device 200 on the inspection platform 103 of the quay crane 100 may also achieve the scanning inspection during the process of unloading the container 300 from a ship or during the process of loading the container 300 from the ground to a ship, to avoid in-yard inspection, and the process of transferring the container 300 to an AGV trolley and transporting by the AGV trolley the container 300 to an inspection location is omitted, thereby greatly reducing loading, unloading and scanning inspection time of the container 300, shortening the total circulation time of the container 300 at the port, and improving the circulation efficiency; this may also prevent dangerous prohibited articles from entering a yard, and improve the safety.

In the above-mentioned illustrative embodiment, during the scanning inspection, the container 300 keeps stationary, and the inspection device 200 moves relative to the container 300. Optionally, the container inspection system further includes a drive mechanism, which is configured to drive the inspection device 200 to move relative to the container 300.

Optionally, guide rails are provided on two sides of each station, and the inspection device 200 moves along the guide rails to ensure the accuracy of the movement route of the inspection device 200 and improve the accuracy of scanning inspection.

Further, the container inspection system further includes a switching mechanism, which is configured to switch the inspection device 200 among the plurality of stations.

By providing the switching mechanism, the inspection device 200 may quickly switch among the plurality of stations, and from an attitude capable of scanning inspecting on the container 300 on one station to an attitude capable of scanning inspection on the container 300 on another station, thereby improving the degree of automation of the container inspection system; moreover, after finishing scanning inspection on the container 300 on one station, the inspection device 200 may quickly switch into a state of scanning inspection on the container 300 on another station, instead of that after scanning inspection on the container on an inspection station is finished, it also needs to transfer the container from the inspection station to a temporary storage station, and wait for the next container to arrive at the inspection station so as to start scanning inspection on the next container like in the related art, thus greatly shortening the waiting time for the inspection device 200 to perform scanning inspection on the next container, and improving the scanning inspection efficiency.

The switching mechanism includes a rotary switching mechanism, which is connected with the inspection device 200, for rotating at least part of the inspection device 200, so that after finishing scanning inspection on the container 300 on one of the plurality of stations, the inspection device 200 can perform scanning inspection on the container 300 on another of the plurality of stations.

The rotary switching mechanism is simple in movement form and flexible in switching, which is beneficial to shortening the switching time and improving the efficiency of scanning inspection. The switch mechanism being configured to be rotary also enables the arrangement of the plurality of stations to be more convenient.

Optionally, the plurality of stations include a first station 104 and a second station 105, wherein the first station 104 is arranged on a side of a long edge of the second station 105, and a long edge of the first station 104 and the long edge of the second station 105 are parallel to each other; and the switching mechanism is configured to rotate at least part of the inspection device 200 by 180 degrees. As shown in Figs. 5 and 6, after finishing scanning inspection on the container 300 on the first station 104, the inspection device 200 rotates 180 degrees and thereby can perform scanning inspection on the container 300 on the second station 105.

The area ranges of the first station 104 and the second station 105 are roughly similar to the shape of the container 300. Generally speaking, the container 300 is in the shape of a cuboid. The long edge of the first station 104 and the long edge of the second station 105 described above are parallel to a length direction of the container 300 (as a first direction).

Optionally, the plurality of stations may also include three stations, which are evenly arranged around the circumference. After finishing scanning inspection on the container 300 on one station, the inspection device 200 may rotate 120 degrees to switch to scanning inspection on the container 300 on another station adjacent thereto.

Of course, in the case where the plurality stations include four or more stations, the inspection device 200 may also switch to scanning inspection on another container 300 by rotating an appropriate angle, which is not detailed here.

In the above-mentioned various embodiments, the inspection device 200 optionally, but not limited to, moves in the length direction of the container 300.

There may be multiple options for the specific structure of the inspection device 200, so long as switching of the inspection device 200 between different stations can be achieved by the switching mechanism.

Optionally, the inspection device 200 includes a cabin 201, a ray source 202 and an L-shaped arm installed with a detector, the ray source 202 being disposed in the cabin 201 and rotatable relative to the inspection platform 103, and the L-shaped arm being mounted on the cabin 201 and rotatable relative to the inspection platform 103.

Specifically, the inspection device 200 includes a rotation drive mechanism, which is configured to drive the ray source 202 and/or the L-shaped arm to rotate relative to the cabin 201.

As shown in Fig. 5, the top of the cabin 201 is provided with a slewing bearing 205, wherein an outer ring of the slewing bearing 205 is connected with the cabin 201, an inner ring of the slewing bearing 205 is connected with a horizontally arranged horizonal arm 203 of the L-shaped arm, and a vertically arranged vertical arm 204 is connected with the horizonal arm 203. Rotation of the inner ring relative to the outer ring of the slewing bearing 205 may cause the L-shaped arm to rotate relative to the cabin 201, to achieve switching of the inspection device 200 between different stations.

The slewing bearing 205 may be driven into rotation by a power device such as a hydraulic motor, a friction wheels, or a brake.

Correspondingly, a rotation mechanism may be provided between the ray source 202 and the cabin 201, so that the ray source 202 can also rotate relative to the cabin 201. This will not be detailed here.

In addition to the manner that the cabin 201 is fixed relative to the inspection platform 103, and the ray source 202 and the L-shaped arm rotate relative to the inspection platform 103, the switching of the inspection device 200 between different stations may also be achieved in such a manner that the cabin 201 rotates relative to the inspection platform 103 to cause the ray source 202 and the L-shaped arm to rotate. The manner that the cabin 201 is fixed relative to the inspection platform 103 and the ray source 202 and the L-shaped arm rotate relative to the inspection platform 103 is not limited by the shape of the cabin 201, and does not involve an increase in the spacing width between two stations due to a reserved space for rotation of the cabin 201.

In an example not forming part of the claimed invention, the plurality of stations include a first station 104 and a second station 105, wherein the first station 104 is arranged on a side of a short edge of the second station 105, and a short edge of the first station 104 and the short edge of the second station 105 are parallel to each other; and the switching mechanism includes a linear switching mechanism, which is connected with the inspection device 200, for enabling the inspection device 200 to continue to move along a long edge of the second station 105 after finishing scanning inspection on the container 300 located on the first station 104, to perform scanning inspection on the container 300 located on the second station 105.

The area ranges of the first station 104 and the second station 105 are roughly similar to the shape of the container 300. Generally speaking, the container 300 is in the shape of a cuboid. The short edge of the first station 104 and the short edge of the second station 105 described above are parallel to a width direction of the container 300 (as a second direction).

The linear switching mechanism may be understood as a mechanism that causes the inspection device 200 to move linearly. In the case, not forming part of the claimed invention, where the first station 104 and the second station 105 are arranged in the above-mentioned manner, the linear switching mechanism may cause the inspection device 200 to move along the length direction of the container 300 on the first station 104, and after finishing scanning inspection on the container 300, continues to move along the length direction of the container 300 on the second station 105 to perform scanning inspection on the container 300 on the second station 105.

Specifically, the linear switching mechanism and the drive mechanism that drives the inspection device 200 to move may be a same mechanism. Compared with a drive mechanism in a container inspection system performing scanning inspection only at an inspection station in the related art, the drive mechanism in the embodiment drives the inspection device 200 to move along a same direction for longer time.

In the above-mentioned various embodiments, the first hoisting component 101 is further configured to hoist the container 300 on which scanning inspection is completed from the station where the container is located and transport the container 300 to a container transport equipment, so as to transport the container 300 to a target location by the container transport equipment.

As to the above-mentioned target location, in the case where the container is unloaded from a cargo carrying equipment such as a ship, the target location may be a warehouse for storing containers on the ground of a yard of the port, or may also be a freight truck loaded with containers, etc.; and in the case where the container is loaded to a cargo carrying equipment such as a ship, the target location may be a storage bin for storing containers on the cargo carrying equipment such as a ship.

In the case where the container is unloaded from a cargo carrying equipment such as a ship, the above-mentioned container transport equipment may be an AGV trolley, a container transport truck or the like. In the case where the container is loaded to a cargo carrying equipment such as a ship, the above-mentioned container moving equipment may be an equipment, disposed on the cargo carrying equipment such as a ship, for placing containers to corresponding storage bins.

In other embodiments, the quay crane 100 further includes a second hoisting component 102 for hoisting the container 300 on which scanning inspection is completed from the station where the container is located and transporting the container 300 to a container transport equipment. That is, the first hoisting component 101 is configured to hoist the container 300 and transport the container 300 to at least one of the plurality of stations, and the second hoisting component 102 is configured to hoist the container 300 on which scanning inspection is completed from the station where the container is located and transport the container 300 to a container transport equipment. Thus, their respective responsibilities are clearer to facilitate control.

Optionally, the set height of the second hoisting component 102 is lower than that of the first hoisting component 101 to avoid interference between the two hoisting components on travel routes, and also shorten the path for hoisting and moving away the container 300 and improve the circulation efficiency.

Optionally, the container inspection system further includes a guide mechanism disposed on the inspection platform 103, for guiding the container 300 to fall in place on at least one of the plurality of stations. By providing the guide mechanism, the container 300 may fall accurately; it may also limit the container 300 to prevent the container 300 from deviating from the station disposed on the inspection platform 103, and ensure the container 300 may be accurately hoisted every time after the first hoisting component 101 or the second hoisting component 102 falls, thereby reducing the alignment time and improving the circulation efficiency.

As shown in Figs. 5 and 6, the guide mechanism includes a plurality of guide pillars having conic tops and arranged along edges of at least one of the plurality of stations, such that the container 300 may be guided and positioned by the guide pillars. The tops of the guide pillars are cone-shaped, so that the container 300 may be better guided to fall quickly and accurately.

Optionally, the guide mechanism is liftable relative to the inspection platform 103. Thus, when the container 300 falls, the guide mechanism may be raised to guide the container 300; after the container 300 falls in place, the and guide mechanism may be dropped to prevent the guide mechanism from influencing the movement of the inspection device 200; in addition, when the inspection device 200 switches between different stations, the and guide mechanism is dropped so that the guide mechanism may be prevented from interfering with the switching of the inspection device 200.

Optionally, the inspection device 200 includes a cabin 201, a ray source 202 and an L-shaped arm installed with a detector, the ray source 202 being disposed in the cabin 201, and the L-shaped arm being mounted on the cabin 201; and the guide mechanism includes a plurality of first guide pillars 106 and a plurality of second guide pillars 107, wherein the first guide pillars 106 are disposed on a side of the plurality of stations close to the cabin 201, the plurality of first guide pillars 106 being non-liftable; and the second guide pillars 107 are disposed on a side of the plurality of stations away from the cabin 201, the plurality of second guide pillars 107 being liftable. This arrangement may simplify the control as much as possible and improve the operation efficiency while ensuring the normal movement and switching of the inspection device 200.

Based on the above-mentioned container inspection system, the present disclosure further proposes a port facility, which includes the above-mentioned container inspection system. The positive technical effects of the container inspection system in the various embodiments described above are also applicable to the port facility and are not repeated here.

Further, the container inspection method further includes:
hoisting the container 300 on which scanning inspection is completed from the station where the container is located and transporting the container 300 to a container transport equipment.

Optionally, before driving the inspection device 200 to move, the method may further include: detecting whether the container 300 is in place; if yes, executing the step of driving the inspection device 200 to move; and if not, performing detection again until detecting that the container 300 is in place.

A working process of an embodiment of the container inspection system, the port facility, and the container inspection method of the present disclosure will be described below in conjunction with Figs. 1-6:

As shown in Figs. 1-3 and 5-6, in an embodiment of the container inspection system provided by the present disclosure, the container inspection system includes a quay crane 100, and the quay crane 100 is provided with a first hoisting component 101. The first hoisting component 101 hoists the container 300 from a container transport equipment such as a ship and places the container 300 onto an inspection platform 103 disposed on the quay crane 100.

The inspection platform 103 is provided with a first station 104 and a second station 105, the sizes of the first station 104 and the second station 105 being substantially same as the size of the container 300. Generally, the container 300 is in the shape of a cuboid. In this embodiment, the first station 104 is arranged on a side of a long edge of the second station 105, and a long edge of the first station 104 and the long edge of the second station 105 are parallel to each other; and a line connecting the center of the first station 104 and the center of the second station 105, and the long edge of the first station 104 are parallel to each other.

The inspection device 200 includes a cabin 201, and a ray source 202 disposed in the cabin 201. The top of the cabin 201 is provided with a slewing bearing 205, wherein an outer ring of the slewing bearing 205 is connected with the cabin 201, and an inner ring of the slewing bearing 205 is connected with an L-shaped arm. The L-shaped arm is installed with a detector, and the L-shaped arm includes a horizontally arranged horizonal arm 203 and a vertically arranged vertical arm 204. The cabin 201 is arranged between the first station 104 and the second station 105, and the L-shaped arm spans across the stations on the inspection platform 103.

A plurality of first guide pillars 106 are disposed on a side of the first station 104 away from the cabin 201 and on a side of the second station 105 away from the cabin 201, with a distance formed between every two adjacent first guide pillars 106, the first guide pillars 106 being liftable; and a plurality of second guide pillars 107 are disposed on a side of the first station 104 close to the cabin 201 and on a side of the second station 105 close to the cabin 201, with a distance formed between every two adjacent second guide pillars 107, the second guide pillars 107 being non-liftable.

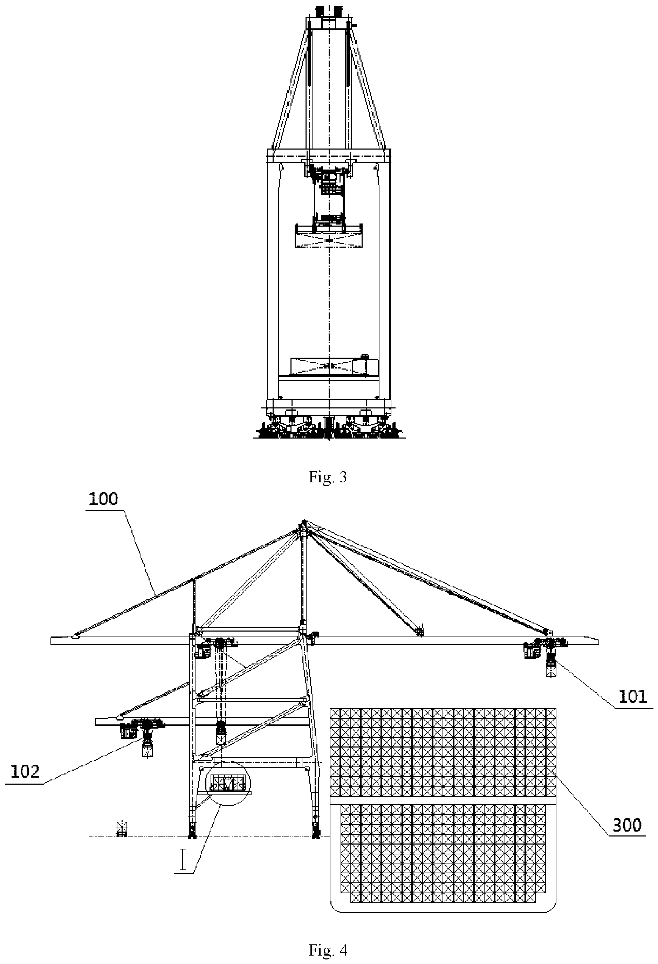

In another embodiment, as shown in Fig. 4, the quay crane 100 is further provided with a second hoisting component 102. By means of the second hoisting component 102, the container 300 on which scanning inspection is completed on the first station 104 or the second station 105 may be hoisted and transported to a container transport equipment such as an AGV trolley or a container transport truck at a port, and the container is transported to a target location by the container transport equipment.

Initially, supposing the first station 104 and the second station 105 are both empty, a container 300 is hoisted and transported by the first hoisting component 101 from a ship to the first station 104, and after the container 300 is detected to fall in place, the inspection device 200 is started and moves relative to the first station 104, to perform scanning inspection on the container 300 on the first station 104; during the scanning inspection on the container 300 on the first station 104, the first hoisting component 101 may hoist a second container 300 from the ship and transport the second container 300 to the second station 105, and the inspection device 200 rotates 180 degrees after finishing scanning inspection on the container 300 on the first station 104, and the vertical arm 204 rotates from the left side of the first station 104 to the right side of the second station 105, and the inspection device 200 may return to an initial end and then move relative to the second station 105, and perform scanning inspection on the container 300 on the second station 105 during the movement, or the inspection device 200 may not return to the initial end first, but performs scanning inspection on the container 300 on the second station 105 during returning to the initial end.

Of course, initially, if the first station 104 and the second station 105 are both empty, it is also possible that a container 300 is hoisted and transported to the first station 104, and a second container 300 is hoisted and transported to the second station 105, by the first hoisting component 101, and then the inspection device 200 is started.

During the scanning inspection on the container 300 on the second station 105, the container 300 on which scanning inspection is completed on the first station 104 may be hoisted and transported by the first hoisting component 101 or the second hoisting component 102 to an AGV trolley (or container transport truck) on the ground of the port, and then a third container 300 is hoisted and transported by the first hoisting component 101 from a ship to the first station 104, so that after finishing scanning inspection on the container 300 on the second station 105, the inspection device 200 may continue, by switching, to perform scanning inspection on the third container 300 on the first station 104. The process proceeds in this way to accomplish continuous scanning inspection on multiple containers 300.

Before the container 300 is hoisted and transported to the first station 104 or the second station 105, the first guide pillars 106 on the left side of the first station 104 and on the right side of the second station 105 rise to guide the falling process of the container 300; after the container 300 falls in place, the first guide pillars 106 fall to prevent the first guide pillars 106 from influencing the movement of the inspection device 200; moreover, when the L-shaped arm of the inspection device 200 rotates, the first guide pillars 106 also need to be in a fallen state, to avoid collision with the first guide pillars 106 during rotation the L-shaped arm.

From the description of multiple embodiments of the container inspection system, the port facility, and the container inspection method of the present disclosure, it can be seen the embodiments of the container inspection system, the port facility, and the container inspection method of the present disclosure have at least one or more of the following advantages:
1. the inspection platform is provided with a plurality of stations, and the inspection device may perform scanning inspection on the container on each station, respectively, so that the inspection position is more flexible, which is beneficial to improving the scanning inspection efficiency;
2. the switching mechanism is provided so that after scanning inspection on the container on one station is completed, the inspection device may switch to another station to perform scanning inspection on another container without secondary transfer, thereby effectively shorting the interval time and greatly improving the scanning inspection efficiency;
3. the inspection device is disposed on the quay crane, and performs scanning inspection during loading or unloading of the container, to avoid in-yard inspection, thereby simplifying the process, reducing the loading, unloading and scanning time, shortening the total circulation time of the container at the port, and improving the circulation efficiency; this also prevents prohibited articles from entering a yard; and by arranging the inspection device on the quay crane, a floor area may also be saved, and there is no need to reserve a special inspection location in an area outside the quay crane, so that the overall layout of the port is more reasonable; and
4. the guide mechanism provided on the stations may guide the container to fall in place to improve the falling accuracy.

Described above are preferred implementations of the present disclosure, and it should be noted that to those of ordinary skill in the art, a number of improvements and modifications may also be made without departing from principles of the present disclosure, and these improvements and modifications should also be encompassed within the protection scope of the present disclosure. The scope of the invention is defined by the appended claims.

## Claims

1. A container inspection system, comprising:
a quay crane (100), comprising:
an inspection platform (103), provided with a plurality of stations; and
a first hoisting component (101), for hoisting a container (300) and transporting the container (300) to at least one of the plurality of stations; and
an inspection device (200), disposed on the inspection platform (103) and configured to switch among the plurality of stations, to perform scanning inspection on the container (300) on each of the plurality of stations, respectively;
**characterized in that**: the container inspection system further comprises:
a switching device, drivingly connecting with the inspection device (200) and configured to drive the inspection device (200) to rotate relative to the inspection platform (103), so that the inspection device switches from one to another of the plurality of stations.

2. The container inspection system according to claim 1, wherein the plurality of stations comprise a first station (104) and a second station (105), the first station (104) being arranged on a side of the second station (105) along a first direction, the first direction being a length direction of the container (300); and the switching device is configured to drive the inspection device (200) to rotate 180 degrees relative to the inspection platform (103), to achieve switching of the inspection device (200) between the first station (104) and the second station (105).

3. The container inspection system according to claim 2, wherein the inspection device (200) comprises:
a cabin (201);
a ray source (202), disposed in the cabin (201) and rotatable relative to the inspection platform (103);
an L-shaped arm, mounted on the cabin (201) and rotatable relative to the inspection platform (103); and
a detector mounted on the L-shaped arm.

4. The container inspection system according to claim 1, wherein the first hoisting component (101) is configured to hoist the container (300) on which scanning inspection is completed from a station where the container (300) is located and transporting the container (300) to a container transport equipment.

5. The container inspection system according to claim 1, wherein the quay crane (100) further comprises:
a second hoisting component (102), for hoisting the container (300) on which scanning inspection is completed from a station where the container (300) is located and transporting the container (300) to a container transport equipment.

6. The container inspection system according to claim 1, further comprising:
a guide mechanism, disposed on the inspection platform (103), for guiding the container (300) to fall in place on at least one of the plurality of stations.

7. The container inspection system according to claim 6, wherein the guide mechanism comprises:
a plurality of guide pillars, with conic tops and being arranged along edges of at least one of the plurality of stations.

8. The container inspection system according to claim 6, wherein the guide mechanism is liftable relative to the inspection platform (103).

9. The container inspection system according to claim 6, wherein the inspection device (200) comprises a cabin (201), a ray source (202) and an L-shaped arm installed with a detector, the ray source (202) being disposed in the cabin (201), and the L-shaped arm being mounted on the cabin (201); and the guide mechanism comprises:
a plurality of first guide pillars (106), disposed on a side of the plurality of stations close to the cabin (201), the plurality of first guide pillars (106) being non-liftable; and
a plurality of second guide pillars (107), disposed on a side of the plurality of stations away from the cabin (201), the plurality of second guide pillars (107) being liftable.

10. A port facility, comprising the container inspection system of any one of claims 1-9.

11. A container inspection method, comprising:
hoisting and transporting, by a first hoisting component (101) of a quay crane (100), a container (300) to at least one of a plurality of stations disposed on an inspection platform (103) of the quay crane (100); and
driving an inspection device (200) disposed on the inspection platform (103) to switch among the plurality of stations, to perform scanning inspection on the container (300) on each of the plurality of stations, respectively;
wherein driving an inspection device (200) disposed on the inspection platform (103) to switch among the plurality of stations is **characterized in that** it comprises:
driving the inspection device (200) disposed on the inspection platform (103) to rotate relative to the inspection platform (103), so that the inspection device switches from one to another of the plurality of stations.

12. The container inspection method according to claim 11, further comprising:
hoisting the container (300) on which scanning inspection is completed from a station where the container (300) is located and transporting the container (300) to a container transport equipment.

## Patentansprüche

1. Ein Behälterinspektionssystem, umfassend
einen Kaikran (100), umfassend:
eine Inspektionsplattform (103), die mit einer Vielzahl von Stationen versehen ist; und eine erste Hebekomponente (101) zum Anheben eines Behälters (300) und zum Transportieren des Behälters (300) zu mindestens einer der Vielzahl von Stationen; und
eine Inspektionsvorrichtung (200), die auf der Inspektionsplattform (103) angeordnet und so konfiguriert ist, dass sie zwischen den mehreren Stationen umschaltet, um eine Abtastinspektion des Behälters (300) an jeder der mehreren Stationen durchzuführen;
**dadurch gekennzeichnet, dass**: das Behälterinspektionssystem ferner
eine Umschaltvorrichtung, die antriebsmäßig mit der Inspektionsvorrichtung (200) verbunden und so konfiguriert ist, dass sie die Inspektionsvorrichtung (200) so antreibt, dass sie sich relativ zu der Inspektionsplattform (103) dreht, so dass die Inspektionsvorrichtung von einer zu einer anderen der Vielzahl von Stationen umschaltet, umfasst.

2. Behälterinspektionssystem nach Anspruch 1, wobei die mehreren Stationen eine erste Station (104) und eine zweite Station (105) umfassen, wobei die erste Station (104) auf einer Seite der zweiten Station (105) entlang einer ersten Richtung angeordnet ist, wobei die erste Richtung eine Längsrichtung des Behälters (300) ist; und die Umschaltvorrichtung so konfiguriert ist, dass sie die Inspektionsvorrichtung (200) so antreibt, dass sie sich relativ zu der Inspektionsplattform (103) um 180 Grad dreht, um ein Umschalten der Inspektionsvorrichtung (200) zwischen der ersten Station (104) und der zweiten Station (105) zu erreichen.

3. Das Behälterinspektionssystem nach Anspruch 2, wobei die Inspektionsvorrichtung (200):
eine Kabine (201);
eine Strahlenquelle (202), die in der Kabine (201) angeordnet und relativ zur Inspektionsplattform (103) drehbar ist;
einen L-förmigen Arm, der an der Kabine (201) angebracht und relativ zur Inspektionsplattform (103) drehbar ist; und
einen Detektor, der an dem L-förmigen Arm angebracht ist, umfasst.

4. Behälterinspektionssystem nach Anspruch 1, wobei die erste Hebekomponente (101) so konfiguriert ist, dass sie den Behälter (300), an dem eine Abtastinspektion durchgeführt wird, von einer Station, an der sich der Behälter (300) befindet, anhebt und den Behälter (300) zu einer Behältertransportausrüstung transportiert.

5. Behälterinspektionssystem nach Anspruch 1, wobei der Kaikran (100) ferner
eine zweite Hebekomponente (102) zum Heben des Behälters (300), an dem die Scan-Inspektion abgeschlossen ist, von einer Station, an der sich der Behälter (300) befindet, und den Behälter (300) zu einer Behältertransporteinrichtung transportiert, umfasst.

6. Behälterinspektionssystem nach Anspruch 1, ferner umfassend:
einen Führungsmechanismus, der auf der Inspektionsplattform (103) angeordnet ist, um den Behälter (300) so zu führen, dass er auf mindestens eine der mehreren Stationen fällt.

7. Behälterinspektionssystem nach Anspruch 6, wobei der Führungsmechanismus eine Vielzahl von Führungssäulen mit konischen Spitzen, die entlang der Kanten von mindestens einer der Vielzahl von Stationen angeordnet sind, umfasst.

8. Behälterinspektionssystem nach Anspruch 6, wobei der Führungsmechanismus relativ zur Inspektionsplattform (103) anhebbar ist.

9. Behälterinspektionssystem nach Anspruch 6, wobei die Inspektionsvorrichtung (200) eine Kabine (201), eine Strahlenquelle (202) und einen mit einem Detektor installierten L-förmigen Arm umfasst, wobei die Strahlenquelle (202) in der Kabine (201) angeordnet ist und der L-förmige Arm an der Kabine (201) montiert ist; und der Führungsmechanismus:
eine Mehrzahl von ersten Führungssäulen (106), die auf einer Seite der Mehrzahl von Stationen in der Kabine (201) angeordnet sind, wobei die Mehrzahl von ersten Führungssäulen (106) nicht anhebbar ist; und
eine Mehrzahl von zweiten Führungssäulen (107), die auf einer von der Kabine (201) abgewandten Seite der Mehrzahl von Stationen angeordnet sind, wobei die Mehrzahl von zweiten Führungssäulen (107) anhebbar ist, umfasst.

10. Hafenanlage, die das Behälterinspektionssystem nach einem der Ansprüche 1 bis 9 aufweist.

11. Verfahren zur Inspektion von Behältern, umfassend:
Heben und Transportieren eines Behälters (300) mittels einer ersten Hebekomponente (101) eines Kaikrans (100) zu mindestens einer von mehreren Stationen, die auf einer Inspektionsplattform (103) des Kaikrans (100) angeordnet sind; und
Antreiben einer Inspektionsvorrichtung (200), die auf der Inspektionsplattform (103) angeordnet ist, um zwischen den mehreren Stationen zu wechseln, um eine Abtastinspektion des Behälters (300) an jeder der mehreren Stationen durchzuführen;
wobei das Antreiben einer Inspektionsvorrichtung (200), die auf der Inspektionsplattform (103) angeordnet ist, um zwischen der Vielzahl von Stationen zu wechseln, **dadurch gekennzeichnet ist, dass**:
die Inspektionsvorrichtung (200), die auf der Inspektionsplattform (103) angeordnet ist, um sich relativ zu der Inspektionsplattform (103) zu drehen, so dass die Inspektionsvorrichtung von einer zu einer anderen der Vielzahl von Stationen wechselt, angetrieben wird, umfasst.

12. Verfahren zur Inspektion von Behältern nach Anspruch 11, ferner umfassend: Anheben des Behälters (300), an dem die Inspektion durch Abtasten abgeschlossen wird, von einer Station, an der sich der Behälter (300) befindet, und Transportieren des Behälters (300) zu einer Behältertransportvorrichtung.

## Revendications

1. Système d'inspection de conteneur, comprenant :
une grue de quai (100), comprenant :
une plate-forme d'inspection (103), dotée d'une pluralité de stations ; et
un premier composant de levage (101), destiné à lever un conteneur (300) et à transporter le conteneur (300) jusqu'à l'une au moins de la pluralité de stations ; et
un dispositif d'inspection (200), disposé sur la plate-forme d'inspection (103) et configuré pour commuter entre l'une et l'autre de la pluralité de stations, afin d'effectuer une inspection par balayage sur le conteneur (300) sur chacune de la pluralité de stations, respectivement ;
**caractérisé en ce que** :
le système d'inspection de conteneur comprend en outre :
un dispositif de commutation, connecté par entraînement au dispositif
d'inspection (200) et configuré pour entraîner le dispositif
d'inspection (200) et le mettre en rotation relativement à la plate-forme
d'inspection (103), de telle sorte que le dispositif d'inspection commute entre l'une et l'autre de la pluralité de stations.

2. Système d'inspection de conteneur selon la revendication 1, dans lequel la pluralité de stations comprend une première station (104) et une seconde station (105), la première station (104) étant agencée sur un côté de la seconde station (105) le long d'une première direction, la première direction étant une direction longitudinale du conteneur (300) ; et le dispositif de commutation est configuré pour entraîner le dispositif d'inspection (200) et le mettre en rotation de 180 degrés relativement à la plate-forme d'inspection (103), afin d'effectuer une commutation du dispositif d'inspection (200) entre la première station (104) et la seconde station (105).

3. Système d'inspection de conteneur selon la revendication 2, dans lequel le dispositif d'inspection (200) comprend :
une cabine (201) ;
une source de rayonnement (202), disposée dans la cabine (201) et pouvant être mise en rotation relativement à la plate-forme d'inspection (103) ;
un bras en forme de L, monté sur la cabine (201) et pouvant être mis en rotation relativement à la plate-forme d'inspection (103) ; et
un détecteur monté sur le bras en forme de L.

4. Système d'inspection de conteneur selon la revendication 1, dans lequel le premier composant de levage (101) est configuré pour lever le conteneur (300) sur lequel l'inspection par balayage est réalisée depuis une station où le conteneur (300) est situé, et pour transporter le conteneur (300) jusqu'à un équipement de transport de conteneur.

5. Système d'inspection de conteneur selon la revendication 1, dans lequel la grue de quai (100) comprend en outre :
un second composant de levage (102), destiné à lever le conteneur (300) sur lequel l'inspection par balayage est réalisée depuis une station où le conteneur (300) est situé, et destiné à transporter le conteneur (300) jusqu'à un équipement de transport de conteneur.

6. Système d'inspection de conteneur selon la revendication 1, comprenant en outre :
un mécanisme de guidage, disposé sur la plate-forme d'inspection (103), destiné à guider le conteneur (300) pour qu'il prenne place sur ladite au moins une de la pluralité de stations.

7. Système d'inspection de conteneur selon la revendication 6, dans lequel le mécanisme de guidage comprend :
une pluralité de piliers de guidage, ayant des sommets coniques et étant agencés le long de bords de ladite au moins une de la pluralité de stations.

8. Système d'inspection de conteneur selon la revendication 6, dans lequel le mécanisme de guidage peut être soulevé relativement à la plate-forme d'inspection (103).

9. Système d'inspection de conteneur selon la revendication 6, dans lequel le dispositif d'inspection (200) comprend une cabine (201), une source de rayonnement (202) et un bras en forme de L installé avec un détecteur, la source de rayonnement (202) étant disposée dans la cabine (201), et le bras en forme de L étant monté sur la cabine (201) ; et le mécanisme de guidage comprend :
une pluralité de premiers piliers de guidage (106), disposés sur un côté de la pluralité de stations près de la cabine (201), la pluralité de premiers piliers de guidage (106) ne pouvant pas être soulevés ; et
une pluralité de seconds piliers de guidage (107), disposés sur un côté de la pluralité de stations en éloignement de la cabine (201), la pluralité de seconds piliers de guidage (107) pouvant être soulevés.

10. Installation portuaire, comprenant le système d'inspection de conteneur selon l'une quelconque des revendications 1 à 9.

11. Procédé d'inspection de conteneur, comprenant les étapes consistant à :
lever et transporter, via un premier composant de levage (101) d'une grue de quai (100), un conteneur (300) jusqu'à l'une au moins d'une pluralité de stations disposées sur une plate-forme d'inspection (103) de la grue de quai (100) ; et
entraîner un dispositif d'inspection (200) disposé sur la plate-forme d'inspection (103) pour qu'il commute parmi la pluralité de stations, afin d'effectuer une inspection par balayage sur le conteneur (300) sur chacune de la pluralité de stations, respectivement ;
dans lequel l'étape consistant à entraîner un dispositif d'inspection (200) disposé sur la plate-forme d'inspection (103) pour qu'il commute entre la pluralité de stations est **caractérisée en ce qu'**elle comprend :
d'entraîner le dispositif d'inspection (200) disposé sur la plate-forme (103) pour le mettre en rotation relativement à la plate-forme d'inspection (103), de telle sorte que le dispositif d'inspection commute de l'une à l'autre de la pluralité de stations.

12. Procédé d'inspection de conteneur selon la revendication 11, comprenant en outre les étapes consistant à :
lever le conteneur (300) sur lequel l'inspection par balayage est réalisée depuis une station où le conteneur (300) est situé, et transporter le conteneur (300) jusqu'à un équipement de transport de conteneur.
